# EUROPEAN PATENT SPECIFICATION

(11) **EP 3 725 062 B1**
(45) Date of publication and mention of the grant of the patent: **12.06.2024**
(21) Application number: 19803847.3
(22) Date of filing: 09.04.2019
(51) Int. Cl.: H04W 4/70, H04L 67/141, H04L 67/61

(54) **ELECTRONIC DEVICE FOR PERFORMING NETWORK CONNECTION BASED ON DATA TRANSMISSION OF APPLICATION AND METHOD THEREOF**
ELEKTRONISCHE VORRICHTUNG ZUR DURCHFÜHRUNG EINER NETZWERKVERBINDUNG AUF DER GRUNDLAGE EINER DATENÜBERTRAGUNG UND VERFAHREN DAFÜR
DISPOSITIF ÉLECTRONIQUE POUR L'EXÉCUTION D'UNE CONNEXION RÉSEAU BASÉE SUR LA TRANSMISSION DE DONNÉES D'UNE APPLICATION, ET PROCÉDÉ ASSOCIÉ

(30) Priority: 18.05.2018 KR 20180057184
(43) Date of publication of application: 21.10.2020
(73) Proprietor: Samsung Electronics Co., Ltd., Gyeonggi-do 16677 (KR)
(72) Inventor: PARK, Hongju, Suwon-si Gyeonggi-do 16677 (KR); KIM, Sohmann, Suwon-si Gyeonggi-do 16677 (KR); KIM, Hyejeong, Suwon-si Gyeonggi-do 16677 (KR); PARK, Kumrye, Suwon-si Gyeonggi-do 16677 (KR); LEE, Soomin, Suwon-si Gyeonggi-do 16677 (KR)
(74) Representative: Gulde & Partner
(86) International application number: PCT/KR2019/004218
(87) International publication number: WO 2019/221389

(56) References cited:
- WO-A1-2011/149532
- WO-A1-2011/149532
- US-A1- 2005 059 397
- US-A1- 2008 062 934
- US-A1- 2011 161 484
- US-A1- 2011 161 484
- US-A1- 2018 020 418
- US-B1- 8 050 275
- US-B1- 8 050 275

## Description

### [Technical Field]

The disclosure relates to an electronic device for performing a network connection based on the data transmission of an application, and a method thereof.

### [Background Art]

In a 5^{th} generation (5G) network defined by the International Telecommunication Union (ITU) and the 3^{rd} generation partnership project (3GPP), the core network structure that is at least partly different from a 4^{th} generation (4G) network is considered. Because the components included in the core network of the 5G network specification may be classified as not depending on a physical entity but depending on a function, the 5G network may provide a plurality of network services to an electronic device connected to the 5G network without adding additional hardware. For example, the 5G network may provide different network services to electronic devices, based on at least one of data transmission speed, latency, reliability, a number of electronic devices accessed to a network, network access period of electronic devices, or average data usage.

An electronic device may perform data transmission associated with an application. The network service type or traffic type applied to data transmission may be different for each application. The network service type may include, for example, enhanced mobile broadband (eMBB), ultra-reliable and low latency communication (URLLC), or massive machine type communication (mMTC) defined in 5G network. For example, the eMBB may indicate a network service that requires high data transmission speed and low latency, such as a smartphone service. For example, the URLLC may indicate a network service that requires low latency and high reliability such as a disaster relief network or vehicle to everything (V2X). For example, the mMTC may indicate a network service that does not require low latency while a plurality of entities are connected to each other, such as the Internet of Things (IoT). For example, the traffic type may include voice, video call, video streaming, or web service. In similar regards, publication US 2008/062934 A1 relates to methods for operating a mobile communication device, wherein a wireless network is selected for operating a specific application based on the requirement of the applications and identified properties and characteristics of the available wireless networks.

### [Disclosure]

### [Technical Problem]

Network capability required for data transmission may be different depending on the network service type or traffic type applied to the data transmission of the application. For example, the network capability may indicate quality of service (QoS) information such as minimum bandwidth, latency, or maximum error rate for data transmission.

Because applications developed by the third party such as 3^{rd} party applications are not developed in consideration of the network capability required for data transmission, the electronic device must perform a network connection suitable for the network service type or traffic type applied to data transmission of an application.

### [Technical Solution]

In accordance with an aspect of the invention, an electronic device is provided, according to independent claim 1. Further embodiments of the electronic device are provided in dependent claims 2-4.

In accordance with another aspect of the invention, a method of an electronic device is provided, according to independent claim 5. Further embodiments of the method are provided in dependent claims 6-8.

### [Advantageous Effects]

An electronic device may receive a network service suitable for an application by adaptively performing a network connection based on the parameter required for data transmission of the application.

A variety of effects directly or indirectly understood through this disclosure may be provided.

While the disclosure has been shown and described with reference to various embodiments thereof, it will be understood by those skilled in the art that various changes in form and details may be made therein without departing from the scope of the appended claims.

### [Description of Drawings]

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment;
FIG. 2a is a block diagram of a network, according to an embodiment;
FIG. 2b is a block diagram of an architecture including a plurality of user plane function (UPF) nodes in a 5G network, according an embodiment;
FIG. 3 is a block diagram of an operation of performing a network connection based on a first parameter, according to an embodiment;
FIG. 4 is a flowchart of an electronic device performing a network connection based on a first parameter, according to an embodiment;
FIG. 5a is a block diagram of a layer structure of an electronic device including an enabling layer, according to an embodiment;
FIG. 5b is a block diagram of modules constituting an enabling layer, according to an embodiment;
FIG. 6 is an illustration of an SSC mode in a 5G network, according to an embodiment;
FIG. 7a is a block diagram of an edge computing technology in a 5G network, according to an embodiment;
FIG. 7b is a block diagram of an edge computing technology in a 5G network, according to an embodiment;
FIG. 8 is an illustration of a local area data network (LADN) in a 5G network, according to an embodiment;
FIG. 9a is a flowchart of an electronic device grouping a plurality of applications, according to an embodiment;
FIG. 9b is a block diagram of an operation of grouping a plurality of applications, according to an embodiment;
FIG. 10 is a flowchart of an electronic device performing a network connection based on a priority of a first parameter, according to an embodiment;
FIG. 11 is a flowchart of an electronic device performing a network connection based on a first parameter and a second parameter, according to an embodiment; and
FIG. 12 is a flowchart of an electronic device detecting that a network capability is changed, according to an embodiment.

### [Best Mode]

Hereinafter, various embodiments of the disclosure are described with reference to the accompanying drawings. However, those of ordinary skill in the art will recognize that modification, an equivalent, and/or an alternative on various embodiments described herein may be variously made without departing from the scope of the appended claims.

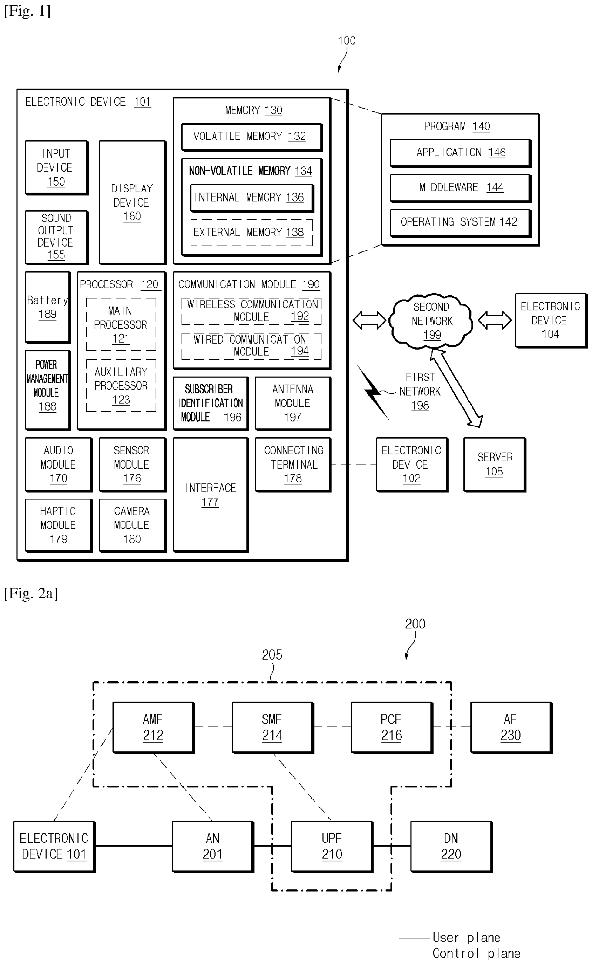

FIG. 1 is a block diagram of an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of, the main processor 121.

The auxiliary processor 123 may control at least some functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing a record, and the receiver may be used for incoming calls. According to an embodiment, the receiver may be implemented as separate from, or as part of, the speaker.

The display device 160 may visually provide information to the outside (e.g., a user) of the electronic device 101. The display device 160 may include, for example, a display, a hologram device, or a projector and control circuitry to control a corresponding one of the display, the hologram device, and the projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102 directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth 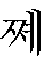 , wireless-fidelity (Wi-Fi) direct, a standard of the Infrared Data Association (IrDA)) or the second network 199 (e.g., a long-range communication network, such as a cellular network, the Internet, or a computer network (e.g., a LAN or a wide area network (WAN)). These various types of communication modules may be implemented as a single component (e.g., a single integrated circuit or chip), or may be implemented as multi components (e.g., multi chips) separate from each other. The wireless communication module 192 may identify and authenticate the electronic device 101 in a communication network, such as the first network 198 or the second network 199, using subscriber information (e.g., an international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

FIG. 2a is a block diagram of a network 200, according to an embodiment.

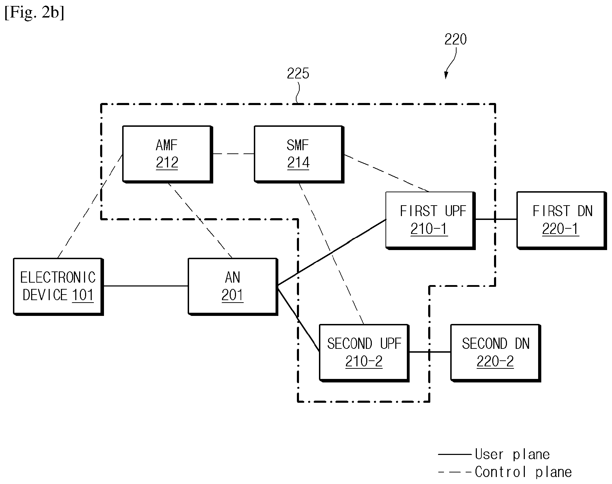

Referring to FIG. 2a, the network 200 (e.g., the second network 199 of FIG. 1) may refer to a 5G network as defined in the ITU and the 3GPP. For example, the function, structure, or arrangement of components illustrated in FIGS. 2a and 2b may be implemented with reference to the 3GPP technical specification (TS) 23.501. Each of the components included in the network 200 may indicate a physical entity unit or a software or module unit capable of performing an individual function. In the network 200, a user plane indicates a path for transmitting and receiving a data packet required for a user of the electronic device 101 to receive a service; the control plane may indicate a path for transmitting and receiving a control signal for connection, management, or release of a network used to transmit the data packet.

According to an embodiment, the electronic device 101 may refer to a device used by a user. For example, the electronic device 101 may indicate a terminal, a user equipment (UE), a mobile station, a subscriber station, a remote terminal, a wireless terminal, or a user device.

According to an embodiment, an access network (AN) 201 may provide a channel for wireless communication with the electronic device 101. The AN 201 may indicate a radio access network (RAN), a base station, an eNodeB (or eNB), a 5G node, a transmission/reception point (TRP), or a 5th generation NodeB (5GNB).

According to an embodiment, a data network (DN) 220 may provide a service (e.g., Internet service, IP multimedia subsystem (IMS) service) by transmitting and receiving data (or data packets) to or from the electronic device 101 via a core network (CN) 205 and the AN 201.

According to an embodiment, the CN 205 may include a user plane function (UPF) node 210, an access and mobility management function (AMF) node 212, a session management function (SMF) node 214, and a policy control function (PCF) node 216. The types and the number of the components included in the CN 205 are not limited to the example illustrated in FIG. 2a. At least one of the same component (e.g., a UPF node) or another component (e.g., a unified data management (UDM) node) may be further included or at least one component may be omitted.

According to an embodiment, the AMF node 212 and the SMF node 214 may be the same as the function of the mobility management entity (MME) in the 4G network, or may perform at least part of the MME function. For example, the AMF node 212 may manage access authorization for the CN 205 of the electronic device 101 and information associated with the mobility of the electronic device 101. The SMF node 214 may generate a session for data transmission between the electronic device 101 and the DN 220 via the UPF node 210 and may control the UPF re-location for changing the UPF node 210 connected to the electronic device 101.

According to an embodiment, the PCF node 216 may be the same as the function of the policy control resource function (PCRF) in the 4G network, or may perform at least part of the PCRF function. For example, the PCF node 216 may determine the policy associated with the data transmission of the electronic device 101, based on the information associated with the QoS or billing information.

According to an embodiment, the UPF node 210 may perform functions of a packet data network gateway (P-GW) and a serving gateway (S-GW) in the 4G network. For example, the UPF node 210 may perform a routing function on the user plane such that data can be transmitted or received between the electronic device 101 and the DN 220, and may perform an anchor function to assign an IP address corresponding to the DN 220.

According to an embodiment, an application function (AF) node 230 may provide the PCF node 216 with information associated with QoS.

FIG. 2b is a block diagram of an architecture 220 including a first UPF node 210-1 and a second UPF node 210-2 in a 5G network, according to an embodiment. FIG. 2b illustrates an embodiment in which the PCF node 216 and the AF node 230 in FIG. 2a are omitted in the CN 225 in FIG. 2b. However, the CN 225 may include the PCF node 216 and the AF node 230.

Referring to FIG. 2b, in the architecture 220 of the 5G network, the CN 225 may include a plurality of UPF nodes (e.g., the first UPF 210-1 and the second UPF 210-2). FIG. 2b illustrates two UPF nodes (e.g., the first UPF 210-1 and the second UPF 210-2 included in the CN 225. However, the present disclosure is not intended to be limited to the number of UPF nodes illustrated in FIG. 2b.

According to an embodiment, because the CN 225 may include the first UPF node 210-1 and the second UPN node 210-2, the electronic device 101 may generate a plurality of packet data unit (PDU) sessions via the first UPF node 210-1 and the second UPF node 210-2. For example, the electronic device 101 may generate a PDU session with the first DN 220-1 via the first UPF node 210-1 and may generate another PDU session with the second DN 220-2 via the second UPF node 210-2. For example, the electronic device 101 may generate the PDU session with the first DN 220-1 (or the second DN 220-2) via the first UPF node 210-1 and may generate another PDU session with the same DN via the second UPF node 210-2.

According to an embodiment, a plurality of PDU sessions may support different network capabilities. For example, the network capability may indicate at least one of QoS information (e.g., 5G QoS indicator (5QI) defined in the 3GPP) such as transmission speed (e.g., minimum bandwidth), latency, or reliability (e.g., maximum error rate) or whether the technology (e.g., edge computing or session and service continuity (SSC) mode) provided in the 5G network is capable of being supported. For example, the network capability may include at least one of NSSAI defined in that 3GPP, policy information (billing policy or universal software radio peripheral (URSP)), location information (e.g., cell identifier (ID), base station ID, UPF ID, or local area data network (LADN) ID) or the function that a communication operator provides separately. For example, the NSSAI may indicate a network service type.

According to an embodiment, the electronic device 101 may generate at least one PDU session or may allocate a pre-generated PDU session, based on at least one of a parameter required for data transmission of the application or the capability of a network capable of being accessed by the electronic device 101. The data of an application may include not only user data but also a control signal that is transmitted or received via a wireless network (e.g., the AN 201, the CN 225, the first DN 220-1, or the second DN 220-2) such that the electronic device 101 executes the application. For example, the electronic device 101 may perform a network connection (e.g., a PDU session) based on at least one of the network service type or the traffic type required for data transmission of an application or QoS information in the network capability, or whether a technology (e.g., an SSC mode or edge computing technology) provided in the 5G network is capable of being supported. For example, the electronic device 101 may perform the network connection based on at least one of information about a location capable of transmitting data of an application, location information, or policy information in the network capability. For example, the electronic device 101 may perform a network connection, which the communication operator specifies separately, for applications that the communication operator specifies separately.

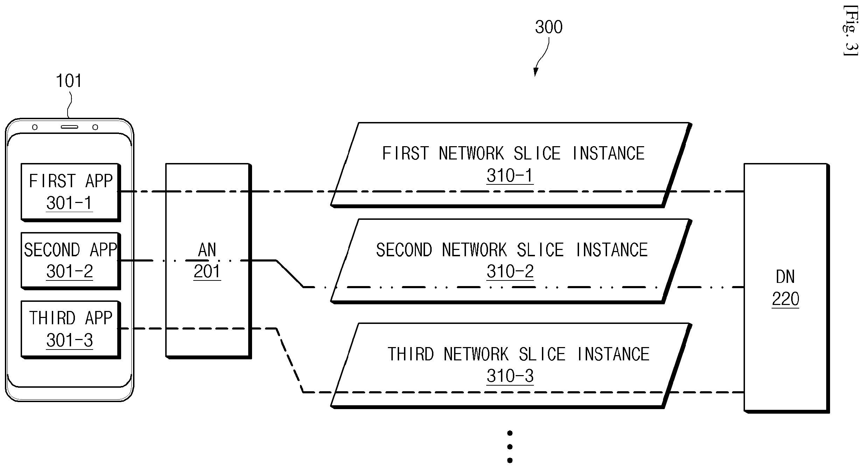

FIG. 3 is a block diagram of an operation of performing a network connection based on a first parameter, according to an embodiment. However, the present disclosure is not intended to be limited to the number of network slice instances or applications illustrated in FIG. 3.

Referring to FIG. 3, the electronic device 101 may perform a network connection with the DN 220 via the first network slice instance 310-1, the second network slice instance 310-2, and the third network slice instance 310-3. However, the electronic device 101 may perform the network connection with a plurality of DNs via the first network slice instance 310-1, the second network slice instance 310-2, and the third network slice instance 310-3.

A network slice instance may indicate a logical network connection unit for data transmission. In a 5G network, a CN (e.g., the CN 205) may establish a plurality of different logical networks with the same physical devices, using network function virtualization (NFV) or software defined networking (SDN). For example, the electronic device 101 may perform a network connection via network slice instances having different network capabilities.

In each of the first network slice instance 310-1, the second network slice instance 310-2, and the third network slice instance 310-3, at least one of a UPF, an SMF, an AMF, or a PCF may be different. For example, in each of the first network slice instances 310-1, the second network slice instance 310-2, and the third network slice instance 310-3, all UPF nodes may be different from one another or UPF nodes other than UPF nodes performing an anchor function may be different.

In each of the first network slice instance 310-1, the second network slice instance 310-2, and the third network slice instance 310-3, at least one of an SSC mode defined in the 3GPP, whether an edge computing technology is supported, or local area data network (LADN) may be different.

In each of the first network slice instance 310-1, the second network slice instance 310-2, and the third network slice instance 310-3, at least one of QoS information or policy information may be different from each other.

In each of the first network slice instance 310-1, the second network slice instance 310-2, and the third network slice instance 310-3, the type of radio access technology (RAT) may be different from each other. For example, the type of RAT may include a 3G protocol, a 4G protocol such as long term evolution (LTE), a 5G protocol such as new radio (NR), or a Wi-Fi protocol.

Network slice instances may include a function (e.g., a mobile edge computing service) that a communication operator specifies separately.

The electronic device 101 may determine an appropriate network slice instance for an application, based on parameters required for data transmission of each of the first application 301-1, the second application 301-2, and the third application 301-3 installed in the electronic device 101 and/or the capability of the network (e.g., the CN 205 illustrated in FIG. 2a) capable of being accessed by the electronic device 101. The parameter required for data transmission of an application may be referred to as a first parameter, and a parameter indicating the capability of a network may be referred to as a second parameter.

For example, the network service type or the traffic type, which is required for data transmission of each of the first application 301-1, the second application 301-2, and the third application 301-3 may be different from each other. The electronic device 101 may identify the first parameter indicating the network service type or the traffic type and may determine a network slice instance including the second parameter indicating the network capability (e.g., QoS information, NSSAI, SSC mode, or whether an edge computing technology is supported) satisfying the network service type or the traffic type indicated by the first parameter. Through the above-described method, the electronic device 101 may perform a network connection for data transmission for each application, even though the application developer does not individually consider the network capability required for data transmission of the application.

For example, the first parameter may indicate at least one of a minimum data speed, a data transmission failure rate, a data latency, an SSC mode, or whether to use an edge server, which is required for data transmission. For example, in the case of an application supporting a service, such as a V2X service where latency is critical, the first parameter may directly indicate the required latency value. The electronic device 101 may determine a network slice instance including a second parameter indicating the network capability that is the same as or most similar to (or replaceable for) the value indicated by the first parameter.

For example, the location or RAT type, which is required for data transmission, of each of the first application 301-1, the second application 301-2, and the third application 301-3 may be different from each other. The electronic device 101 may identify location information or the RAT type, which is indicated by the first parameter and may determine the network slice instance including the second parameter indicating the network capability (e.g., a cell ID, a base station ID, a UPF ID, an LADN ID, a RAT type, or policy information) satisfying the location information or the RAT type, which is indicated by the first parameter.

For example, when the first application 301-1 is specified by the communication operator so as to connect to a specific network slice, the electronic device 101 may determine whether the corresponding network slice is available and may determine the corresponding slice instance.

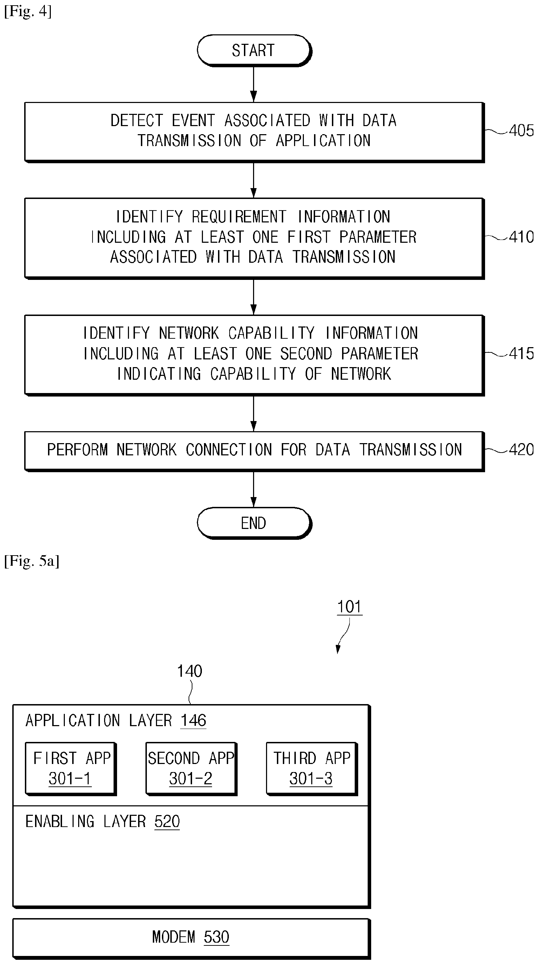

FIG. 4 is a flowchart of the electronic device 101 performing a network connection based on a first parameter, according to an embodiment. The steps illustrated in FIG. 4 may be performed by the electronic device 101 or the component (e.g., the processor 120) included in the electronic device 101.

Referring to FIG. 4, in step 405, the electronic device 101 may detect an event associated with data transmission of an application installed in the memory 130 of the electronic device 101. For example, the event may include at least one of an operation in which the application-related update is performed, an operation of receiving a user input for making a request for data transmission associated with the application, or an operation in which the application is executed.

In step 410, the electronic device 101 may identify requirement information including at least one first parameter associated with data transmission. For example, the first parameter may indicate at least one of a network service type (e.g., eMBB, URLLC, or mMTC), QoS information (e.g., data transmission speed, data error rate, or transmission latency), a type of RAT, a traffic type, whether it is possible to support an edge computing technology, an SSC mode, a data network name (DNN), network slicing information (e.g., NSSAI), a function that a communication operator specifies separately, or information about a location capable of transmitting data of an application. When an application is installed on the electronic device 101 or when the update associated with the application is performed, the electronic device 101 may obtain requirement information. The application may require one or more different first parameters. For example, a first parameter set 1 and a first parameter set 2 may include different requirements.

In step 415, the electronic device 101 may identify network capability information including at least one second parameter indicating the capability of the network (e.g., the CN 205). For example, the second parameter may indicate at least one of QoS information, an NSSAI, whether it is possible to support an edge computing technology, an SSC mode, policy information (e.g., URSP or billing policy), a type of RAT, a DNN, a function that a communication operator specifies separately, or location information. When the electronic device 101 periodically receives network capability information or when a network accessed by the electronic device 101 is changed by a reselection, a handover, or a redirection operation, the electronic device 101 may receive capability information of the network. Alternatively, when the capability information of the network is changed, the electronic device 101 may receive the changed network capability information. Alternatively, when detecting an event associated with data transmission, the electronic device 101 may receive the network capability information. The electronic device 101 may receive the network capability information in response to a user request.

In step 420, the electronic device 101 may perform a network connection for data transmission of an application based at least on the first parameter and the second parameter. The electronic device 101 may select a network slice instance, which has the second parameter satisfying (or corresponding to a value) a value indicated by the first parameter, from among the first network slice instance 310-1, the second network slice instance 310-2, and the third network slice instance 310-3. When there is no network slice instance having the second parameter satisfying the first parameter among the pre-formed network slice instances, the electronic device 101 may terminate a network connection, perform a default network connection, make a request for generating a new network slice instance, or generate a new network slice instance.

FIG. 5a is a block diagram of a layer structure of the electronic device 101 including an enabling layer 520, according to an embodiment.

Referring to FIG. 5a, the program 140 may be referred to as software or a program module. For example, the program 140 may be composed of instructions executed by the processor 120 of the electronic device 101. The electronic device 101 may process data for each layer of the program 140, and may transmit or receive a signal for a network connection via a modem 530. The modem 530 may be included in the auxiliary processor 123 or the communication module 190 of FIG. 1. The modem 530 may be referred to as a communication circuit.

The program 140 may include the application layer 146 and the enabling layer 520. The program 140 may further include at least one of a framework layer or a kernel layer at the lower end of the application layer 146.

The application layer 146 may include at least one application (e.g., the first application 301-1, the second application 301-2, or the third application 301-3). For example, at least one application included in the application layer 146 may include a 3rd party application. The at least one application may perform a function providing a user with various services provided from the DN 220.

The enabling layer 520 may identify the first parameter required for data transmission of at least one application and/or the second parameter indicating the capability of a network. For example, the first parameter may indicate at least one of a network service type (e.g., eMBB, URLLC, or mMTC), QoS information (e.g., data transmission speed, data error rate, or transmission latency), a type of RAT, a traffic type, whether it is possible to support an edge computing technology, an SSC mode, a DNN, network slicing information (e.g., NSSAI), a function that a communication operator specifies separately, or information about a location capable of transmitting data of an application, which is required for data transmission. The second parameter may indicate network capability, for example, at least one of QoS information, NSSAI, SSC mode, or whether an edge computing technology is supported.

The enabling layer 520 may determine a network slice instance for data transmission, based at least partly on the first parameter and/or the second parameter. For example, the enabling layer 520 may determine a network slice instance including a second parameter indicating the network capability that is the same as or most similar to (replaceable for) the value indicated by the first parameter.

The enabling layer 520 may control a network connection based on the determined network slice instance. For example, the enabling layer 520 may generate a connection for application data transmission via the determined network instance.

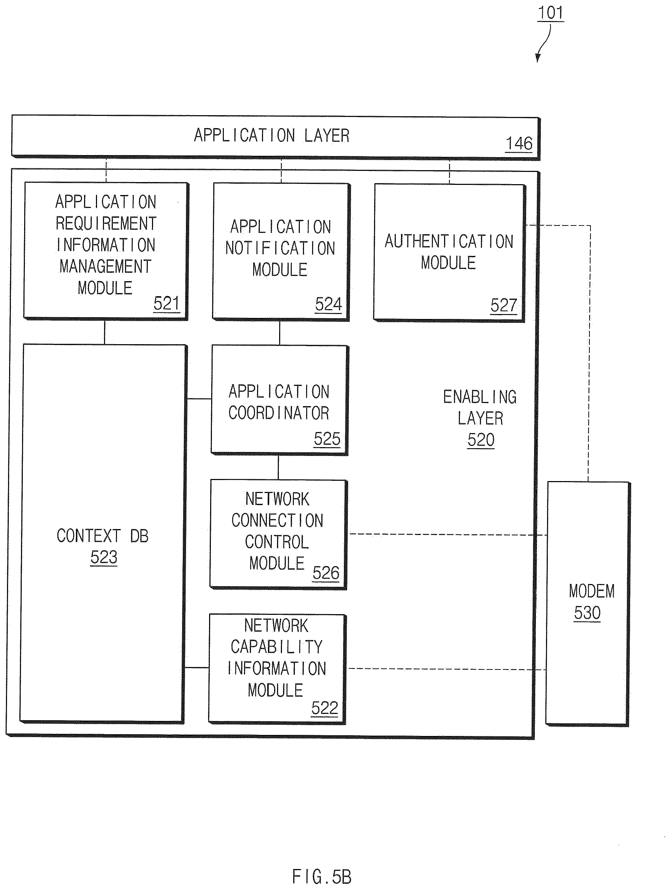

FIG. 5b is a block diagram of modules of the enabling layer 520, according to an embodiment. For example, modules illustrated in FIG. 5b may be composed of instructions executed by a processor (e.g., the processor 120 of FIG. 1). The components (e.g., modules) illustrated in FIG. 5b are merely illustrative, and at least one component may be omitted, or at least two or more modules may be merged.

Referring to FIG. 5b, the enabling layer 520 may include at least one module classified based on a function. The enabling layer 520 may include an application requirement information management module 521, a network capability information management module 522, a context DB 523, an application notification module 524, an application coordinator 525, a network connection control module 526, and an authentication module 527.

According to an embodiment, the application requirement information management module 521 may identify at least one first parameter required for the data transmission of data transmission applications (e.g., 301-1, 301-2, or 301-3) installed in the electronic device 101 and may transmit requirement information including at least one first parameter to the context database (DB) 523. The application requirement information management module 521 may map or convert the identified first parameter to a separately standardized internal parameter to transmit the mapped or converted internal parameter to the context DB 523. For example, in the case of data speed, the application requirement information management module 521 may map a value indicating the data speed to at least one predetermined representative value (e.g., 10 Mbps, 100 Mbps, or 200 Mbps).

According to an embodiment, the network capability information management module 522 may identify at least one second parameter indicating network capability via the modem 530 and may transmit network capability information including at least one second parameter to the context DB 523. The network capability information management module 522 may operate in real time or periodically. While a new application may be installed in the electronic device 101, the previously installed application may be updated, or while the application is executed or is being executed, the network capability information management module 522 may operate periodically or randomly. The network capability information management module 522 may map or convert the identified second parameter to a separately standardized internal parameter to transmit the mapped or converted internal parameter to the context DB 523.

The context DB 523 may store and update the requirement information received from the application requirement information management module 521 and the network capability information received from the network capability information management module 522. The context DB 523 may transmit the stored (or updated) requirement information and the stored (or updated) network capability information to the application coordinator 525.

The application coordinator 525 may determine whether a connection between a network (e.g., a network slice instance) suitable for the requirement information of an application (e.g., the first network slice instance 301-1, the second network slice instance 301-2, or the third network slice instance 301-3) and the electronic device 101 is possible, based on at least one first parameter included in the requirement information and at least one second parameter included in the network capability information. The application coordinator 525 may transmit information associated with the identified result to the application notification module 524 or the network connection control module 526. When the second parameter corresponding to the first parameter is present, the application coordinator 525 may transmit information indicating that the network connection is possible, to the application notification module 524 and may request the network connection control module 526 to connect to the network. When there is no second parameter corresponding to the first parameter, the application coordinator 525 may request the application layer 146 to change the first parameter via the application notification module 524. When there is no second parameter corresponding to the first parameter after the change, the application coordinator 525 may transmit, to the application layer 146, information indicating that the second parameter is absent. When the network connection via the network connection control module 526 fails, the application coordinator 525 may transmit information indicating that a network connection fails, to the application layer 146 via the application notification module 524. When the second parameter corresponding to the first parameter is absent or when the selected network connection fails, the application coordinator 525 may transmit a default network connection to the application layer 146 via the application notification module 524. The application coordinator 525 may compare the first parameter with the second parameter to use at least one mapping rule for determining suitability. For example, the application coordinator 525 may generate a priority of parameters and apply a weight to a parameter of a higher priority. The application coordinator 525 may use the rule specified by the communication operator and may apply a priority to a plurality of mapping rules.

The application coordinator 525 may connect a default PDU session of applications in each of which there is no requirement information, from among applications installed in the electronic device 101, may connect a specific PDU session depending on the rule specified by the communication operator, or may not connect a network connection.

The application notification module 524 may transmit a request for changing the first parameter, information indicating that a network connection is possible, or default network connection information to the application layer 146 at the request of the application coordinator 525.

The network connection control module 526 may connect an application (e.g., the application 301-1, the second application 301-2, or the third application 301-3) to a network (e.g., the first network slice instance 310-1, the second network slice instance 310-2, or the third network slice instance 310-3) via the modem 530 at the request of the application coordinator 525.

The authentication module 527 may perform an authentication process required for executing an application. The authentication module 527 may receive, from an application or a network, information (e.g., an authentication key, an authentication method, or authentication server information) for performing an authentication process on a specific service (e.g., a mobile edge computing service) specified by an operator, or may read out the information from a SIM, and may perform authentication process by using information for performing the authentication process.

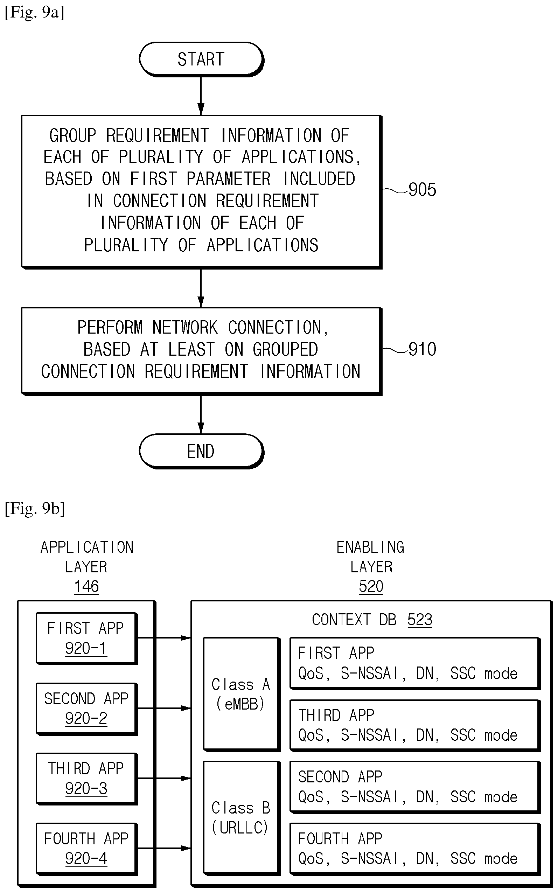

The enabling layer 520 may store the requirement information obtained via the application requirement information management module 521 or the network capability information obtained via the network capability information management module 522, in the context DB 523 in the database format and may perform database update such as adding, revising, or deleting information. The enabling layer 520 may store network connection information mapped for each application. The enabling layer 520 may group applications, in each of which a type of the first parameter is the same or the value of the first parameter is within a specified range, to store the grouped result in the context DB 523. An embodiment of group applications is described below in greater detail with reference to FIGS. 9a and 9b.

When there is a plurality of first parameters, the enabling layer 520 may determine the priority of the plurality of first parameters and may perform a network connection based on the determined priority. For example, the enabling layer 520 may determine a network service type in first parameters of the first application 301-1 as the highest priority and may perform a network connection to a network slice instance, which satisfies the network service type of the first application 301-1, from among a plurality of network slice instances via the application coordinator 525.

When there is no second parameter corresponding to the first parameter, the enabling layer 520 may identify a replaceable second parameter. For example, when the first parameter indicates URLLC requiring low latency and there is no network slice instance supporting the URLLC, the enabling layer 520 may determine whether the connection of a network slice instance having another second parameter (e.g., an edge computing technology) associated with the low latency is possible. When there is no network slice instance having a replaceable second parameter, the enabling layer 520 may terminate a network connection or may suggest another network service. For example, the enabling layer 520 may suggest another network service to an application and may receive consent for the suggested network service from the application or may display a user interface (UI) via the application layer 146 such that a user selects another network service.

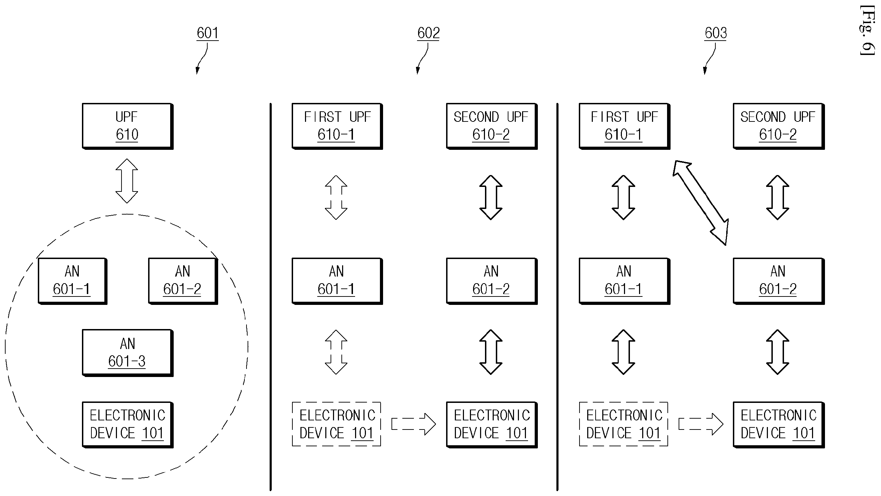

FIG. 6 is an illustration of a session and service continuity (SSC) mode in 5G network, according to an embodiment.

Referring to FIG. 6, because a first UPF node 610-1 and a second UPF node 610-2 (e.g., the first UPF node 210-1 and the second UPF node 210-2 of FIG. 2b) are disposed while being distributed in the CN 205, the electronic device 101 may perform UPF re-location for changing a UPF node, depending on the mobility of the electronic device 101.

In an SSC mode 1 in panel 601, when the electronic device 101 moves, an AN (e.g., AN 601-1, AN 601-2, or AN 601-3) connected to the electronic device 101 may be changed. However, a UPF node 610 connected to the electronic device 101 may not be changed. Because an IP address allocated to the electronic device 101 is fixed when the UPF node 610 is fixed, in the SSC mode 1 in panel 601, the complexity of an operation according to the movement of the electronic device 101 does not increase. On the other hand, end-to-end latency according to the mobility may increase.

In an SSC mode 2 in panel 602 and an SSC mode 3 in panel 603, the electronic device 101 may perform UPF re-location in which the UPF node is changed depending on the mobility of the electronic device 101. The end-to-end latency may be reduced by the UPF re-location. However, because the IP address is changed, the electronic device 101 must generate a session with another UPF node for continuity of a PDU session.

In the SSC mode 2 in panel 602, the electronic device 101 may generate a session with the second UPF node 610-2, after terminating a session connected to the first UPF node 610-1 in advance. When resources (e.g., frequency or time) for wireless communication required by the first UPF node 610-1 (or the AN 601-1) and the second UPF node 610-2 (or the AN 601-2) are different from one another, the SSC mode 2 in panel 602 may be performed. In the SSC mode 2 in panel 602, the delay of data transmission may occur while a new session is generated.

In the SSC mode 3 in panel 603, the electronic device 101 may generate a session with the second UPF node 610-2, before terminating a session connected to the first UPF node 610-1 in advance. The electronic device 101 may prevent data transmission from being delayed and may ensure the security, by generating a new session before the electronic device 101 terminates the session connected in advance in the SSC mode 3 in panel 603.

The electronic device 101 may perform a network connection via network slice instances including different SSC modes based at least partly on requirement information and network capability information. For example, when the network service type of the first application 301-1 is mMTC (e.g., loT) not requiring low latency, the electronic device 101 may perform a network connection for data transmission of the first application 301-1, via the network slice instance supporting the SSC mode 1 in panel 601. For example, when the network service type of the second application 301-2 is URLLC requiring low latency, the electronic device 101 may perform a network connection for data transmission of the second application 301-2, via the network slice instance supporting the SSC mode 3 in panel 603. For example, even though the network service type of the second application 301-2 is URLLC, when there is no mobility of the electronic device 101, the electronic device 101 may perform a network connection via the network slice instance supporting the SSC mode 2 in panel 602. For example, when the network service type of the third application 301-3 is a video call requiring low latency, the electronic device 101 may perform a network connection for data transmission of the third application 301-3, via the network slice instance supporting the SSC mode 3 in panel 603.

In the SSC mode 3 in panel 603, the enabling layer 520 may attempt a new connection via the second UPF 610-2 while maintaining the first PDU session via the first UPF 610-1. When a new connection is normally performed and the second PDU session is connected, the enabling layer 520 may allocate the second PDU session to an application and may terminate the first PDU session. The enabling layer 520 may attempt to perform data communication with a specific server to identify that the second PDU session is connected. The enabling layer 520 may identify that the second PDU session is connected through communication with a core network or may identify that the second PDU session is connected, in the manner specified by the communication operator.

For the purpose of preventing data loss during session switching from the first PDU session to the second PDU session in the SSC mode 3 in panel 603, the enabling layer 520 may forward data such that data packets not transmitted in the first session are transmitted in the second session. Pieces of data, the transmission of which is not completed, are stored in the buffer of the transmission control protocol (TCP) layer of the first session, and the pieces of data stored in the buffer may be forwarded to the TCP layer of the second PDU session.

For the purpose of preventing data loss during session switching from the first PDU session to the second PDU session in SSC mode 3 in panel 603, when packet data, the transmission of which is not completed, remains in the transmission data buffer of the first session after the enabling layer 520 allocates the second PDU session to the application, the enabling layer 520 may transmit the remaining data packet via the first PDU session, while maintaining the first PDU session during a predetermined time without terminating the first PDU session. When the data transmission is completed or when a specific time elapses, the enabling layer 520 may terminate the first PDU session. When the enabling layer 520 forwards the corresponding data to the second PDU session, the corresponding data may be transmitted via both the first PDU session and the second PDU session.

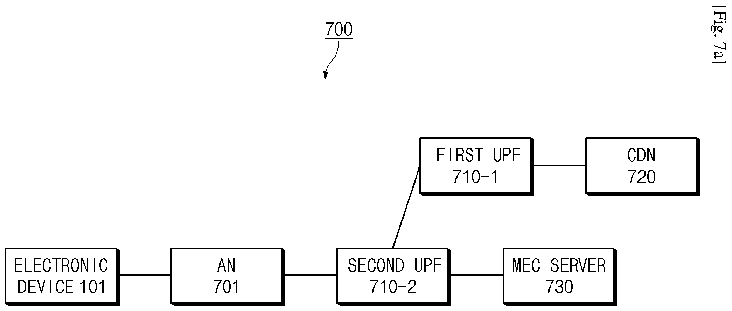

FIGS. 7a to 7b are block diagrams of an edge computing technology in a 5G network, according to an embodiment. The edge computing technology may be referred to as a mobile edge computing (MEC).

Referring to FIG. 7a, in a network 700 (e.g., the network 200 of FIG. 2a), a first UPF node 710-1 may be connected to a central data network (CDN) 720 (e.g., the DN 220 of FIG. 2a), and a second UPF node 710-2 may be connected to a MEC server 730. The second UPF node 710-2 may perform an uplink classifier (ULCL) function to determine a path of data transmission, based on the traffic of data transmission. Because the second UPF node 710-2 and the MEC server 730 may be located geographically close to the electronic device 101, when low latency is required in data transmission of an application, the electronic device 101 may transmit and receive data to and from the MEC server 730 via the second UPF node 710-2.

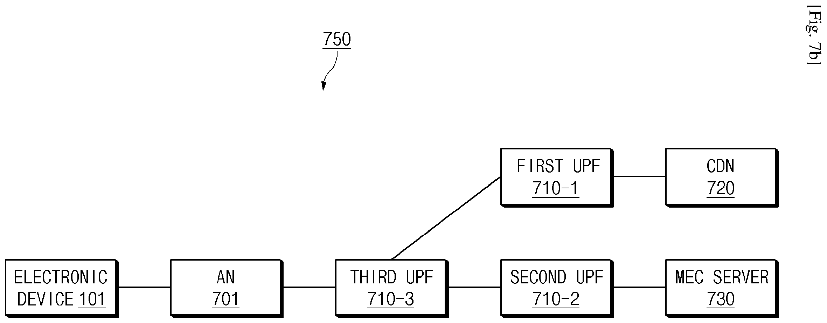

Referring to FIG. 7b, in a network 750 (e.g., the network 200 of FIG. 2a), a third UPF node 710-3 may be connected to an AN 701, the first UPF node 710-1, and the second UPF node 710-2. The third UPF node 710-3 may perform a branching point (BP) function to transmit data via one UPF node of the first UPF node 710-1 or the second UPF node 710-2 depending on a target address.

The electronic device 101 may perform a network connection via network slice instances supporting an edge computing technology, based at least partly on requirement information and network capability information. For example, when the network service type of the first application 301-1 is URLLC requiring low latency or when the traffic type is a video call requiring low latency, the electronic device 101 may perform a network connection for data transmission of the first application 301-1, via the network slice instance supporting the edge computing technology.

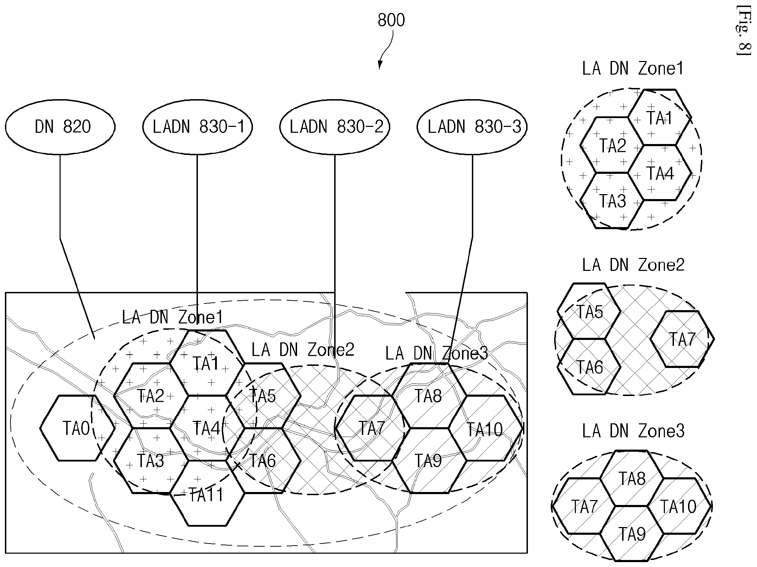

FIG. 8 is an illustration of a local area data network (LADN) in a 5G network, according to an embodiment.

Referring to FIG. 8, in a network 800 (e.g., the network 200 of FIG. 2a), a DN 820 (e.g., the DN 220 of FIG. 2a) may be formed of LADNs 830-1, 830-2, and 830-3. The number of LADNs forming the DN 820 is not limited to the example illustrated in FIG. 8. Each of the LADNs 830-1, 830-2, and 830-3 may be formed in units of tracking area (TA) defined in the 3GPP. For example, the LADN 830-1 is formed of TA 1, TA 2, TA 3, and TA 4; the LADN 830-2 is formed of TA 5, TA 6, and TA 7; and the LADN 830-3 is formed of TA 7, TA 8, TA 9, and TA 10.

The electronic device 101 may perform a network connection with LADNs via a base station (e.g., the AN 201 of FIG. 2a) included in the area of the LADNs. The electronic device 101 may receive information about the LADNs from an AMF 212 while performing a registration operation on the AMF 212. For example, the electronic device 101 may periodically receive information about the LADNs from the AN 201.

Because the location or RAT type required for data transmission of the application is limited due to billing policy or a security problem, the electronic device 101 may identify information about a location, at which data transmission of the application is possible, through the first parameter. For example, the first parameter may indicate information about a specified LADN (e.g., at least one of the LADNs 830-1, 830-2, and 830-3) or may indicate information about a specified TA (e.g., at least one of TA1 to TA10). The electronic device 101 may perform a network connection based on location information indicated by the first parameter. For example, the first parameter of the first application 301-1 may indicate the LADN 830-1. When the electronic device 101 identifies that access to the LADN 830-1 is possible, via network capability information, the electronic device 101 may perform a network connection with the LADN 830-1 for data transmission of the first application 301-1.

The first parameter may indicate other location information other than an LADN. For example, the first parameter may indicate a cell ID, a base station ID, or a UPF ID. In this case, the electronic device 101 may perform a network connection based on the second parameter having the same location information indicated by the first parameter.

FIGS. 9a to 9b are a flowchart and a block diagram of grouping a plurality of applications, according to an embodiment. FIG. 9a is a flowchart of the electronic device 101 grouping a plurality of applications, according to an embodiment. FIG. 9b is a block diagram of an operation of grouping a plurality of applications, according to an embodiment. The operations illustrated in FIG. 9a may indicate operations according to step 420 of FIG. 4.

Referring to FIG. 9a, in step 905, the electronic device 101 may group requirement information of each of a plurality of applications, based on the first parameter included in requirement information of each of the plurality of applications (e.g., 301-1, 301-2, and 301-3). The electronic device 101 may group pieces of requirement information such that the type or value of the first parameter included in the requirement information is at least partly the same.

For example, referring to FIG. 9b, the enabling layer 520 may group applications depending on the network service type in the pieces of requirement information of first application 920-1, second application 920-2, third application 920-3, and fourth application 920-4 stored in the context DB 523. When the network service type of each of the first application 920-1 and the third application 920-3 is eMBB and the network service type of each of the second application 920-2 and the fourth application 920-4 is URLLC, the enabling layer 520 may group the first application 920-1 and third application 920-3 as class A and may group the second application 920-2 and fourth application 920-4 as class B.

In step 910, the electronic device 101 may perform a network connection, based at least on the grouped requirement information of the applications. For example, because the first application 920-1 and the third application 920-3 are class A, the electronic device 101 may perform a network connection via the same network slice instance (or the same PDU session).

The electronic device 101 may reduce the data processing time required to perform a network connection for each application, through the above-described method.

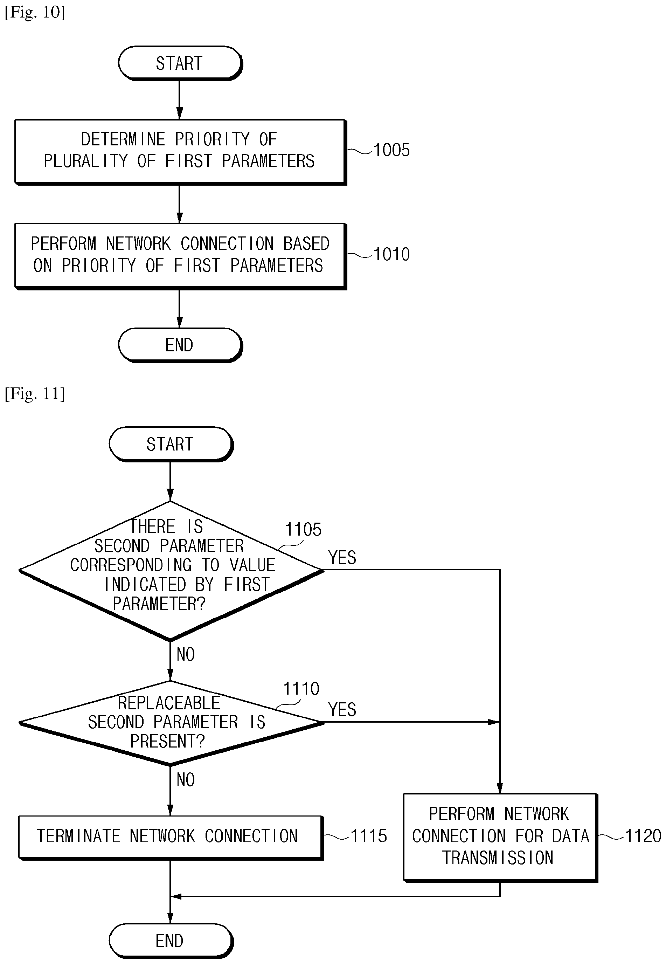

FIG. 10 is a flowchart of the electronic device 101 performing a network connection based on a priority of a first parameter, according to an embodiment. FIG. 10 is a flowchart for describing an embodiment in which there are plural first parameters. The operations illustrated in FIG. 10 may indicate operations according to step 420 of FIG. 4.

Referring to FIG. 10, in step 1005, the electronic device 101 may determine the priority of a plurality of first parameters. The electronic device 101 may determine the priority based on the user settings. For example, in the first parameter of the first application 301-1, the network service type of the first application 301-1 may indicate mMTC not requiring low latency, and the traffic type of the first application 301-1 may indicate a video call requiring low latency. The electronic device 101 may determine that the priority of the traffic type is higher than the priority of the network service type, based on a user input.

In step 1010, the electronic device 101 may perform a network connection based on the priority of the first parameters. For example, because the priority of the traffic type is higher than the priority of the network service type in step 1005, the electronic device 101 may perform a network connection via a network slice instance having low latency.

FIG. 11 is a flowchart of the electronic device 101 performing a network connection based on a first parameter and a second parameter, according to an embodiment. The operations illustrated in FIG. 11 may indicate an operation according to step 420 of FIG. 4.

Referring to FIG. 11, in step 1105, the electronic device 101 may determine whether there is a second parameter corresponding to a value indicated by a first parameter. For example, when the network service type of the first application 301-1 is a URLLC requiring low latency, the electronic device 101 may determine whether there is a second parameter indicating that a network service type is URLLC, among at least one second parameter included in network capability information. When the second parameter satisfying the value indicated by the first parameter is present, in step 1120, the electronic device 101 may perform a network connection via a network slice instance supporting URLLC.

When the second parameter corresponding to the value indicated by the first parameter is absent, in step 1110, the electronic device 101 may determine whether a replaceable second parameter is present. For example, even though there is no second parameter indicating URLLC, the electronic device 101 may identify the second parameter with a value of low latency. For example, the second parameter with a value of low latency may indicate at least one of a latency value, the SSC mode 3 in panel 603 in FIG. 6, or whether it is possible to support an edge computing technology, which is included in QoS information. For example, the first parameter may indicate latency of 10 ms. When there is no second parameter indicating the latency of 10 ms, the electronic device 101 may determine whether the second parameter indicating the latency of 20 ms is present. For example, the first parameter may indicate 5G. When there is no second parameter indicating 5G, the electronic device 101 may determine whether the second parameter indicating 4G is present. When there is a replaceable second parameter, in step 1120, the electronic device 101 may perform a network connection via a network slice instance having the replaceable second parameter.

The replaceable second parameter may be determined based on the priority of the first parameters described above with reference to FIG. 10. For example, the electronic device 101 (e.g., the enabling layer 520) may generate a list as illustrated in Table 1 below, based on the priority of a plurality of first parameters included in requirement information of an application (e.g., the first application 301-1, the second application 301-2, or the third application 301-3).

**[Table 1]**

| Priority | First parameter |
|---|---|
| 1 | URLLC, video call, Local DN, SSC mode 3, delay: 10ms, RAT: 5G |
| 2 | video call, Local DN, SSC mode 3, delay: 20ms, RAT: 5G |
| 3 | video call, Any DN, RAT: 5G |
| 4 | Any DN, RAT: 5G |
| 5 | permission of default connection, RAT: 5G |
| 6 | permission of default connection, RAT: 4G |
| 7 | permission of default connection, RAT: All |

Table 1 above is only an example, and the embodiments disclosed in the present disclosure are not intended to be limited to the examples illustrated in Table 1 above. According to an embodiment, the list illustrated in Table 1 above may be generated by an application or may be generated by the enabling layer 520 of the electronic device 101. For example, the enabling layer 520 may identify the traffic type (e.g., video call) indicated by the first parameter of the application and may determine the priority of another first parameter (e.g., network service type (URLLC), LADN, SSC mode (SSC mode 3), latency (10 ms), and RAT type (5G)) based on the identified traffic type.

According to the embodiment given with reference to Table 1 above, the electronic device 101 may determine whether a network (or network slice instance) including the second parameter (i.e. URLLC, video call, Local DN, SSC mode 3, delay: 10ms, RAT: 5G) corresponding to a value of the first parameter is present. When there is no second parameter corresponding to the value of the first parameter, the electronic device 101 may determine whether the replaceable second parameter (i.e. video call, Local DN, SSC mode 3, delay: 20ms, RAT: 5G) of the second order is present. On the same principle, the electronic device 101 may determine whether a replaceable second parameter is present, in order of the second parameter (video call, any DN, RAT: 5G) of the third order, the second parameter (any DN, RAT: 5G) of the fourth order, the second parameter (permission of default connection, RAT: 5G) of the fifth order, the second parameter (permission of default connection, RAT: 4G) of the sixth order, and the second parameter (permission of default connection, RAT: ALL) of the seventh order.

When the replaceable second parameter is absent, in step 1115, electronic device 101 may terminate the network connection. The electronic device 101 may display the UI indicating that the network connection is terminated, via the application layer 146. The UI may be displayed via the display (e.g., the display device 160 of FIG. 1) of the electronic device 101.

The electronic device 101 may change a type of RAT for performing a network connection of an application, based on billing policy or network capability information. For example, the first parameter of the application (e.g., the first application 301-1, the second application 301-2, or the third application 301-3) may indicate a 5G RAT and a hologram video call. In this case, when it is impossible to provide a 5G data service due to the billing policy of a provider for the application or the change of a wireless resource operation state of the network, a network (e.g., the DN 220) may transmit, to the electronic device 101, information indicating that the 5G data service is not available. For example, the information indicating that the 5G data service is not available may be transmitted to the enabling layer 520 in the form of the second parameter. The information indicating that the 5G data service is not available may be transmitted to the electronic device 101 via a control message, or the electronic device 101 may determine that it is impossible to provide the 5G data service, by measuring a network state (or a channel state). The application coordinator 525 of the enabling layer 520 may determine whether a replaceable second parameter (Wi-Fi, 3G, or 4G) is present. When the replaceable second parameter is present, the application coordinator 525 may request the network connection control module 526 to perform a connection to the replaceable RAT. For example, the application coordinator 525 may display the UI that allows a user of the application to identify the connection to the replaceable RAT via the application notification module 524. The replaceable second parameter may be set in advance in the electronic device 101 or may be received from an application or a network. When a network connection to the replaceable 4G RAT is performed, the application may change the traffic type into the traffic type of a low-quality video call such as a high definition (HD) video call.

When an application provides a HD video call through 4G RAT and it is possible to support a 5G data service through 5G RAT by the billing policy of a provider for the application and the change of a wireless resource operation state of the network, the network may transmit, to the electronic device 101, information indicating that it is possible to provide the 5G data service. The information indicating that the 5G data service is available may be transmitted to the enabling layer 520 in the form of the second parameter. The application coordinator 525 of the enabling layer 520 may request the network connection control module 526 to perform a connection to the replaceable RAT. For example, the application coordinator 525 may display the UI that allows a user of the application to identify the connection to the replaceable RAT via the application notification module 524. When a network connection to the replaceable 5G RAT is performed, the application may change the traffic type into the traffic type of a high-quality video call such as a hologram video call.

The electronic device 101 may change the RAT type of the application by not only the change of the billing policy or network capability information but also the request of a user and an operator. A type of RAT may include a wireless communication technology, a standard, and a specification including Wi-Fi, 3G, 4G, and 5G.

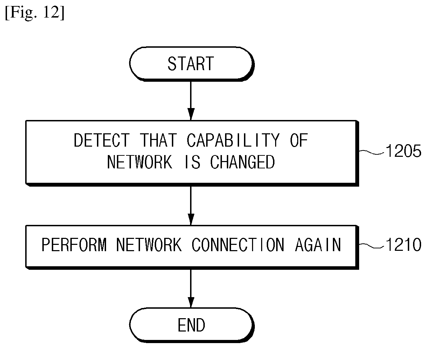

FIG. 12 is a flowchart of the electronic device 101 detecting that a network capability is changed, according to an embodiment. The operations illustrated in FIG. 12 may indicate an operation according to an embodiment after step 420 of FIG. 4 is performed.

Referring to FIG. 12, in step 1205, the electronic device 101 may detect that the capability of a network connected for data transmission is changed. For example, the electronic device 101 may detect that the network capability to which the electronic device 101 is connected is changed, based on periodically received network capability information. For example, the electronic device 101 may detect that a radio link failure (RLF) occurs. For example, the electronic device 101 may detect that at least one value of minimum bandwidth, latency, or error rate, which is included in the QoS information, is changed. For example, while the electronic device 101 is connected to the specified LADN (e.g., LADN 830-1, LADN 830-2, or LADN 830-3), the electronic device 101 may detect that the electronic device 101 is out of the specified LADN area.

In step 1210, the electronic device 101 may perform a network connection again. The electronic device 101 may identify a second parameter, which satisfies a value indicated by the first parameter, from among the at least one second parameter included in the changed network capability information. The electronic device 101 may display the UI indicating that the network capability is changed, via the application layer 146. The UI may be displayed via the display (e.g., the display device 160 of FIG. 1) of the electronic device 101.

As described above, an electronic device (e.g., the electronic device 101 of FIG. 1) may include a communication circuit (e.g., the communication module 190 of FIG. 1), a memory (e.g., the memory 130 of FIG. 1), including instructions, and a processor (e.g., the processor 120 of FIG. 1), operatively connected to the communication circuit and the memory. When the instructions is executed, the processor may be configured to detect an event associated with data transmission of an application (e.g., at least one of application 301-1, application 301-2, or application 301-3 of FIG. 3) stored in the memory, to identify requirement information including at least one first parameter associated with the data transmission, to identify network capability information including at least one second parameter indicating capability of a network capable of being accessed by the electronic device, and to perform a network connection for the data transmission based at least partly on the requirement information and the network capability information.

The first parameter may indicate at least one of a network service type, a traffic type, or information about a location at which the data transmission of the application is possible, and the second parameter may indicate at least one of QoS information, NSSAI, whether it is possible to support an edge computing technology, a SSC mode, policy information, a type of RAT, or location information.

The processor may be configured to store the requirement information in the memory, when the application is installed in the electronic device or update associated with the application is performed and to detect the event associated with the data transmission when the update associated with the application is performed, when a user input to make a request for the data transmission of the application is received, or when the application is performed.

The processor may be configured to group requirement information of each of a plurality of applications based on the first parameter included in the requirement information of each of the plurality of applications and to perform the network connection for the data transmission of the plurality of applications, based on the grouped requirement information.

The processor may be configured to determine a priority of the plurality of first parameters when the first parameter includes a plurality of first parameters and to perform the network connection based on the priority.

The processor may be configured to identify a replaceable second parameter when there is no second parameter corresponding to the at least one first parameter and to perform the network connection based on the replaceable second parameter.

The processor may be configured to perform the network connection for the data transmission again based on the changed capability of the network when the capability of the network is changed after the network connection for the data transmission is performed.

The processor may be configured to perform the network connection based on a 5G network protocol defined in the 3GPP.

As described above, a method (e.g., the method 400 of FIG. 4) of an electronic device (e.g., the electronic device 101 of FIG. 1) may include detecting (e.g., step 405 of FIG. 4) an event associated with data transmission of an application, identifying (e.g., step 410 of FIG. 4) requirement information including at least one first parameter associated with the data transmission, identifying (e.g., step 415 of FIG. 4) network capability information including at least one second parameter indicating capability of a network capable of being accessed by the electronic device, and performing (e.g., step 420 of FIG. 4) a network connection for the data transmission based at least partly on the requirement information and the network capability information.

Detecting the event may include an operation in which an update associated with the application is performed, an operation of receiving a user input to make a request for the data transmission of the application, or an operation in which the application is performed.

The method may include grouping (e.g., step 905 of FIG. 9a) requirement information of each of a plurality of applications based on the first parameter included in the requirement information of each of the plurality of applications. Performing the network connection may include performing (e.g., step 910 of FIG. 9a) the network connection for the data transmission of the plurality of applications, based on the grouped requirement information.

The method may further include determining (e.g., step 1005 of FIG. 10) a priority of the plurality of first parameters, when the first parameter includes a plurality of first parameters and performing (e.g., step 1010 of FIG. 10) the network connection based on the priority.

The method may further include identifying (e.g., step 1110 of FIG. 11) a replaceable second parameter when there is no second parameter corresponding to the at least one first parameter and performing (e.g., step 1120 of FIG. 11) the network connection based on the replaceable second parameter.

The method may further include performing (e.g., step 1210 of FIG. 12) the network connection for the data transmission again based on the changed capability of the network, when the capability of the network is changed after the network connection for the data transmission is performed.

Performing the network connection may include performing the network connection based on a 5G network protocol defined in the 3GPP.

As described above, an electronic device (e.g., the electronic device 101 of FIG. 1) may include a communication circuit (e.g., the communication module 190 of FIG. 1), a memory (e.g., the memory 130 of FIG. 1), including instructions, and a processor (e.g., the processor 120 of FIG. 1), operatively connected to the communication circuit and the memory. When the instructions are executed, the processor may be configured to detect an event associated with data transmission of an application (e.g., at least one of application 301-1, application 301-2, or application 301-3 of FIG. 3) stored in the memory, to identify requirement information including at least one first parameter associated with the data transmission, to identify network capability information including at least one second parameter indicating capability of a network capable of being accessed by the electronic device, and to perform a network connection for the data transmission based at least partly on the requirement information and the network capability information. The first parameter may indicate a network service type or a traffic type, and the second parameter may indicate at least one of QoS information, NSSAI, whether it is possible to support an edge computing technology, or an SSC mode.

The processor may be configured to store the requirement information in the memory, when the application is installed in the electronic device or update associated with the application is performed and to detect the event associated with the data transmission when the update associated with the application is performed, when a user input to make a request for the data transmission of the application is received, or when the application is performed.

The processor may be configured to group requirement information of each of a plurality of applications based on the first parameter included in the requirement information of each of the plurality of applications and to perform the network connection for the data transmission of the plurality of applications, based on the grouped requirement information.

The processor may be configured to determine a priority of the plurality of first parameters when the first parameter includes a plurality of first parameters and to perform the network connection based on the priority.

The processor may be configured to identify a replaceable second parameter when there is no second parameter corresponding to the at least one first parameter and to perform the network connection based on the replaceable second parameter.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not intended to be limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st," "2nd," "first," and "second" may be used to simply distinguish a corresponding component from another, but does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it indicates that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," and "circuitry". The term "module" may indicate a single integral component, or a minimum unit or part thereof, adapted to perform one or more functions. For example, according to an embodiment, the term "module" may indicate a device implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply indicates that the storage medium is a tangible device, but does not include a signal (e.g., an electromagnetic wave), and does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a communication circuit (190);
a memory (130) configured to include instructions; and
a processor (120) operatively connected to the communication circuit (190) and the memory (130), wherein, when the instructions are executed, the processor (120) is configured to:
detect an event associated with data transmission of an application stored in the memory (130);
identify requirement information including a plurality of first parameters associated with the data transmission;
wherein the processor is further configured to:
determine a first parameter having the highest priority among the plurality of first parameters, the first parameter indicating ultra-reliable and low latency communication, URLLC;
identify network capability information including at least one second parameter indicating capability of a network capable of being accessed by the electronic device (101);
determine, from among a plurality of network slice instances of the network, whether there is a network slice instance with a second parameter from among the at least one second parameter, the second parameter indicating that a network service type is the URLLC;
when there is a network slice instance with the second parameter, perform a network connection for the data transmission based on the network slice instance; and
when there is no network slice instance with the second parameter, identify another network slice instance with a replaceable second parameter, and perform a network connection for the data transmission based on the another network slice instance,
wherein the replaceable second parameter indicates that the another network supports edge computing technology.

2. The electronic device (101) of claim 1, wherein the processor (120) is further configured to:
when the application is installed in the electronic device (101) or an update associated with the application is performed, store the requirement information in the memory (130); and
when the update associated with the application is performed, when a user input to make a request for the data transmission of the application is received, or when the application is executed, detect the event associated with the data transmission

3. The electronic device (101) of claim 1, wherein the processor (120) is further configured to:
when the capability of the network is changed after the network connection for the data transmission is performed, perform a network connection for the data transmission again based on the changed capability of the network.

4. The electronic device (101) of claim 1, wherein the processor (120) is further configured to:
perform the network connection based on a 5-generation (5G) network protocol defined in a 3rd generation partnership project (3GPP).

5. A method of an electronic device, the method comprising:
detecting an event associated with data transmission of an application; and
identifying requirement information including a plurality of first parameters associated with the data transmission;
wherein the method is further comprising:
determining a first parameter having the highest priority among the plurality of first parameters, the first parameter indicating ultra-reliable and low latency communication, URLLC;
identifying network capability information including at least one second parameter indicating capability of a network capable of being accessed by the electronic device;
determining, from among a plurality of network slice instances of the network, whether there is a network slice instance with a second parameter from among the at least one second parameter, the second parameter indicating that a network service type is the URLLC;
when there is a network slice instance with the second parameter, performing a network connection for the data transmission based on the network slice instance; and
when there is no network slice instance with the second parameter, identifying another network slice instance with a replaceable second parameter, and performing a network connection for the data transmission based on the another network slice instance,
wherein the replaceable second parameter indicates that the another network supports edge computing technology.

6. The method of claim 5, wherein detecting the event includes:
an operation in which an update associated with the application is performed, an operation of receiving a user input to make a request for the data transmission of the application, or an operation in which the application is executed.

7. The method of claim 5, further comprising:
when the capability of the network is changed after the network connection for the data transmission is performed, performing the network connection for the data transmission again based on the changed capability of the network.

8. The method of claim 5, wherein performing the network connection includes:
performing the network connection based on a 5-generation (5G) network protocol defined in a 3rd generation partnership project (3GPP).

## Patentansprüche

1. Elektronische Vorrichtung (101), die Folgendes umfasst:
eine Kommunikationsschaltung (190);
einen Speicher (130), der so konfiguriert ist, dass er Instruktionen enthält; und
einen Prozessor (120), der operativ mit der Kommunikationsschaltung (190) und dem Speicher (130) verbunden ist, wobei, wenn die Instruktionen ausgeführt werden, der Prozessor (120) konfiguriert ist, um:
ein Ereignis zu erkennen, das mit der Datenübertragung einer im Speicher (130) gespeicherten Anwendung verbunden ist;
Anforderungsinformationen, die eine Vielzahl von ersten Parametern, die mit der Datenübertragung verbunden sind, enthalten, zu identifizieren,
wobei der Prozessor weiterhin konfiguriert ist, um:
einen ersten Parameter mit der höchsten Priorität unter der Vielzahl von ersten Parametern zu bestimmen, wobei der erste Parameter eine ultrazuverlässige Kommunikation mit geringer Latenz, URLLC, anzeigt;
Netzfähigkeitsinformationen zu identifizieren, die mindestens einen zweiten Parameter enthalten, der die Fähigkeit eines Netzwerks angibt, auf das die elektronische Vorrichtung (101) zugreifen kann;
aus einer Vielzahl von Netzwerkscheibeninstanzen des Netzwerks zu bestimmen, ob es eine Netzwerkscheibeninstanz mit einem zweiten Parameter aus dem mindestens einen zweiten Parameter gibt, wobei der zweite Parameter angibt, dass ein Netzwerkdiensttyp die URLLC ist;
wenn es eine Netzwerkscheibeninstanz mit dem zweiten Parameter gibt, eine Netzwerkverbindung für die Datenübertragung basierend auf der Netzwerkscheibeninstanz durchzuführen; und
wenn es keine Netzwerkscheibeninstanz mit dem zweiten Parameter gibt, eine andere Netzwerkscheibeninstanz mit einem ersetzbaren zweiten Parameter zu identifizieren und eine Netzwerkverbindung für die Datenübertragung auf der Grundlage der anderen Netzscheibeninstanz durchzuführen,
wobei der ersetzbare zweite Parameter angibt, dass das andere Netzwerk Edge-Computing-Technologie unterstützt.

2. Elektronische Vorrichtung (101) nach Anspruch 1, wobei der Prozessor (120) ferner konfiguriert ist, um:
wenn die Anwendung in der elektronischen Vorrichtung (101) installiert ist oder eine mit der Anwendung verbundene Aktualisierung durchgeführt wird, die Anforderungsinformationen in dem Speicher (130) zu speichern; und
wenn die mit der Anwendung verbundene Aktualisierung durchgeführt wird, wenn eine Benutzereingabe zur Anforderung der Datenübertragung der Anwendung empfangen wird, oder wenn die Anwendung ausgeführt wird, das mit der Datenübertragung verbundene Ereignis zu erkennen.

3. Elektronische Vorrichtung (101) nach Anspruch 1, wobei der Prozessor (120) ferner konfiguriert ist, um:
wenn die Fähigkeit des Netzwerks geändert wird, nachdem die Netzwerkverbindung für die Datenübertragung durchgeführt wurde, erneut eine Netzwerkverbindung für die Datenübertragung auf der Grundlage der geänderten Fähigkeit des Netzwerks durchzuführen.

4. Elektronische Vorrichtung (101) nach Anspruch 1, wobei der Prozessor (120) ferner konfiguriert ist, um:
die Netzwerkverbindung auf der Grundlage eines Netzwerkprotokolls der 5. Generation (5G), das in einem Partnerschaftsprojekt der dritten Generation (3GPP) definiert ist, durchzuführen.

5. Verfahren für eine elektronische Vorrichtung, wobei das Verfahren umfasst:
Erkennen eines mit der Datenübertragung einer Anwendung verbundenen Ereignisses; und
Identifizieren von Anforderungsinformationen, die eine Vielzahl von ersten Parametern, die mit der Datenübertragung verbunden sind, enthalten;
wobei das Verfahren ferner Folgendes umfasst:
Bestimmen eines ersten Parameters mit der höchsten Priorität unter der Vielzahl von ersten Parametern, wobei der erste Parameter eine ultrazuverlässige Kommunikation mit geringer Latenzzeit, URLLC, anzeigt;
Identifizieren von Netzwerkfähigkeitsinformationen, die mindestens einen zweiten Parameters enthalten, der die Fähigkeit eines Netzwerks angibt, auf das die elektronische Vorrichtung zugreifen kann;
Bestimmen, aus einer Vielzahl von Netzwerkscheibeninstanzen des Netzwerks, ob es eine Netzwerkscheibeninstanz mit einem zweiten Parameter aus dem mindestens einen zweiten Parameter gibt, wobei der zweite Parameter angibt, dass ein Netzwerkdiensttyp die URLLC ist;
wenn es eine Netzwerkscheibeninstanz mit dem zweiten Parameter gibt, Durchführen einer Netzwerkverbindung für die Datenübertragung basierend auf der Netzwerkscheibeninstanz; und
wenn es keine Netzwerkscheibeninstanz mit dem zweiten Parameter gibt, Identifizieren einer anderen Netzwerkscheibeninstanz mit einem ersetzbaren zweiten Parameter und Durchführen einer Netzwerkverbindung für die Datenübertragung auf der Grundlage der anderen Netzwerkscheibeninstanz,
wobei der ersetzbare zweite Parameter angibt, dass das andere Netzwerk Edge-Computing-Technologie unterstützt.

6. Verfahren nach Anspruch 5, wobei das Erkennen des Ereignisses umfasst:
einen Vorgang, bei dem eine mit der Anwendung verbundene Aktualisierung durchgeführt wird, einen Vorgang, bei dem eine Benutzereingabe empfangen wird, um eine Anforderung für die Datenübertragung der Anwendung zu stellen, oder einen Vorgang, bei dem die Anwendung ausgeführt wird.

7. Verfahren nach Anspruch 5, ferner umfassend:
wenn die Fähigkeit des Netzwerks geändert wird, nachdem die Netzwerkverbindung für die Datenübertragung durchgeführt wurde, erneutes Durchführen der Netzwerkverbindung für die Datenübertragung auf der Grundlage der geänderten Fähigkeit des Netzwerks.

8. Verfahren nach Anspruch 5, wobei die Durchführung der Netzwerkverbindung umfasst: Durchführen der Netzwerkverbindung auf der Grundlage eines Netzprotokolls der 5. Generation (5G), das in einem Partnerschaftsprojekt der dritten Generation (3GPP) definiert ist.

## Revendications

1. Dispositif électronique (101), comprenant :
un circuit de communication (190) ;
une mémoire (130) configurée pour inclure des instructions ; et
un processeur (120) connecté de manière opérationnelle au circuit de communication (190) et à la mémoire (130), dans lequel, lorsque les instructions sont exécutées, le processeur (120) est configuré pour :
détecter un événement associé à la transmission de données d'une application stockée dans la mémoire (130) ;
identifier des informations d'exigence comprenant une pluralité de premiers paramètres associés à la transmission de données ;
dans lequel le processeur est en outre configuré pour :
déterminer un premier paramètre ayant la priorité la plus élevée parmi la pluralité de premiers paramètres, le premier paramètre indiquant une communication ultra-fiable et à faible latence, URLLC ;
identifier des informations de capacité de réseau comprenant au moins un deuxième paramètre indiquant la capacité d'un réseau auquel le dispositif électronique (101) peut accéder ;
déterminer, parmi une pluralité d'instances de tranches de réseau du réseau, s'il existe une instance de tranche de réseau avec un deuxième paramètre parmi l'au moins un deuxième paramètre, le deuxième paramètre indiquant qu'un type de service de réseau est l'URLLC ;
lorsqu'il existe une instance de tranche de réseau avec le deuxième paramètre, exécuter une connexion réseau pour la transmission de données sur la base de l'instance de tranche de réseau ; et
lorsqu'il n'y a pas d'instance de tranche de réseau avec le deuxième paramètre, identifier une autre instance de tranche de réseau avec un deuxième paramètre remplaçable, et effectuer une connexion réseau pour la transmission de données sur la base de l'autre instance de tranche de réseau,
dans lequel le deuxième paramètre remplaçable indique que l'autre réseau prend en charge la technologie de l'informatique en périphérie.

2. Dispositif électronique (101) de la revendication 1, dans lequel le processeur (120) est en outre configuré pour :
lorsque l'application est installée dans le dispositif électronique (101) ou qu'une mise à jour associée à l'application est effectuée, stocker les informations d'exigence dans la mémoire (130) ; et
lorsque la mise à jour associée à l'application est effectuée, lorsqu'une entrée d'utilisateur pour faire une demande de transmission de données de l'application est reçue, ou lorsque l'application est exécutée, détecter l'événement associé à la transmission de données.

3. Dispositif électronique (101) de la revendication 1, dans lequel le processeur (120) est en outre configuré pour :
lorsque la capacité du réseau est modifiée après l'exécution de la connexion réseau pour la transmission de données, exécuter à nouveau une connexion réseau pour la transmission de données en fonction de la capacité modifiée du réseau.

4. Dispositif électronique (101) de la revendication 1, dans lequel le processeur (120) est en outre configuré pour :
effectuer la connexion au réseau sur la base d'un protocole de réseau de cinquième génération (5G) défini dans le cadre d'un projet de partenariat de troisième génération (3GPP).

5. Procédé d'un dispositif électronique, le procédé comprenant :
Détecter un événement associé à la transmission de données d'une application ; et
identifier des informations d'exigence comprenant une pluralité de premiers paramètres associés à la transmission de données ;
dans lequel le procédé comprend en outre :
déterminer un premier paramètre ayant la priorité la plus élevée parmi la pluralité de premiers paramètres, le premier paramètre indiquant une communication ultra-fiable et à faible latence, URLLC ;
identifier des informations de capacité du réseau comprenant au moins un deuxième paramètre indiquant la capacité d'un réseau auquel le dispositif électronique peut accéder ;
déterminer, parmi une pluralité d'instances de tranches de réseau du réseau, s'il existe une instance de tranche de réseau avec un deuxième paramètre parmi l'au moins un deuxième paramètre, le deuxième paramètre indiquant qu'un type de service de réseau est l'URLLC ;
lorsqu'il existe une instance de tranche de réseau avec le deuxième paramètre, exécuter une connexion réseau pour la transmission de données sur la base de l'instance de tranche de réseau ; et
lorsqu'il n'y a pas d'instance de tranche de réseau avec le deuxième paramètre, identifier une autre instance de tranche de réseau avec un deuxième paramètre remplaçable, et effectuer une connexion réseau pour la transmission de données sur la base de l'autre instance de tranche de réseau,
dans lequel le deuxième paramètre remplaçable indique que l'autre réseau prend en charge la technologie de l'informatique en périphérie.

6. Procédé de la revendication 5, dans lequel la détection de l'événement comprend :
une opération au cours de laquelle une mise à jour associée à l'application est effectuée, une opération de réception d'une entrée utilisateur pour faire une demande de transmission de données de l'application, ou une opération au cours de laquelle l'application est exécutée.

7. Procédé de la revendication 5, comprenant en outre :
lorsque la capacité du réseau est modifiée après l'exécution de la connexion réseau pour la transmission de données, exécuter à nouveau la connexion réseau pour la transmission de données en fonction de la capacité modifiée du réseau.

8. Procédé de la revendication 5, dans lequel l'exécution de la connexion réseau comprend : exécuter la connexion réseau sur la base d'un protocole de réseau de cinquième génération (5G) défini dans le cadre d'un projet de partenariat de troisième génération (3GPP).
